# FASCICULE DE BREVET EUROPEEN

(11) **EP 2 462 360 B1**
(45) Date de publication et mention de la délivrance du brevet: **28.02.2018**
(21) Numéro de dépôt: 10734498.8
(22) Date de dépôt: 23.07.2010
(51) Int. Cl.: F02C 6/20, F16F 1/02, F16F 1/32, F16C 25/08, B64D 27/00, F01D 25/16

(54) **DISPOSITIF DE PRECONTRAINTE A ACTION CIRCONFERENTIELLE**
VORSPANNUNGSVORRICHTUNG MIT UMLAUFENDER WIRKUNG
PRESTRESSING DEVICE HAVING CIRCUMFERENTIAL ACTION

(30) Priorité: 05.08.2009 FR 0955518
(43) Date de publication de la demande: 13.06.2012
(73) Titulaire: Safran Aircraft Engines, 75015 Paris (FR)
(72) Inventeur: BOSTON, Eric, Jacques, F-77240 Cesson (FR); BOURU, Michel, André, F-77950 Montereau Sur Le Jard (FR); JABLONSKI, Laurent, F-77000 Melun (FR); JOLY, Philippe, Gérard, Edmond, F-77000 Vaux Le Penil (FR)
(74) Mandataire: Gevers & Orès
(86) Numéro de dépôt international: PCT/EP2010/060741
(87) Numéro de publication internationale: WO 2011/015474

(56) Documents cités:
- DE-A1- 3 722 243
- DE-A1- 4 410 963
- GB-A- 512 515
- JP-A- 2008 309 242
- US-A- 4 541 514

## Description

La présente invention concerne un dispositif de précontrainte destiné à assurer un contact entre des éléments de roulement et leur piste de roulement.

Elle s'applique en particulier à un rotor d'hélice non carénée pour une turbomachine. Dans ces dispositifs, un écrou est prévu pour appuyer un des paliers sur le rebord d'une couronne. Une rondelle de verrouillage est ensuite prévue entre le pallier et l'écrou pour immobiliser en rotation cet écrou dans le logement de l'anneau polygonal.

Un dispositif de précontrainte est ensuite avantageusement prévu pour assurer une contrainte permanente entre les pièces. Comme dispositif de précontrainte, on connaît des dispositifs, tels que des ressorts en forme d'étoile, connus sous le nom rondelle Ringspann. On connaît également des rondelles s'apparentant à la forme des rondelles Belleville. Ces rondelles sont coniques pour assurer une fonction de ressort et ainsi mettre en contrainte permanente les pièces concernées. JP 2008 309242 A divulgue un dispositif de précontrainte d'un palier comprenant les caractéristiques du préambule de la revendication indépendante 1. On a pu constater un problème d'usure des pièces en utilisant les dispositifs de précontrainte connus, et en particulier dans des environnements d'ensembles mécaniques soumis à de forts niveaux de vibrations comme par exemple les turbomachines.

L'invention a notamment pour but d'apporter une solution à ce problème.

Elle a pour objet un dispositif de précontrainte permettant de réduire l'usure des pièces devant être soumises à précontrainte dans tous types d'assemblage.

Elle propose à cet effet un dispositif de précontrainte s'étendant autour d'un axe entre un premier plan sensiblement perpendiculaire à l'axe et un deuxième plan sensiblement parallèle au premier plan et axialement décalé par rapport à celui-ci, le dispositif comprenant au moins trois zones de déformation, les zones de déformation s'étendant dans le premier plan, le dispositif comprenant, entre chaque zone de déformation, une surface de contact plane s'étendant dans le deuxième plan.

Selon l'invention, le dispositif n'est donc plus de forme conique mais comprend deux parties qui s'étendent chacune dans un plan perpendiculaire à son axe. La zone de déformation s'étend dans le premier plan. Celui-ci assurera un contact surfacique avec une première pièce, en particulier une rondelle de verrouillage ou un écrou. Les surfaces de contact planes s'étendent dans le deuxième plan et assurent donc un contact surfacique avec une deuxième pièce, en particulier un des paliers de la turbomachine. Par ces surfaces de contact, l'effort de précontrainte est mieux réparti et on obtient ainsi une diminution significative de l'usure de contact entre les pièces devant être soumises à précontrainte. La durée de vie des pièces concernées est ainsi augmentée. Chaque zone de déformation comprend un premier évidemment s'étendant radialement vers l'intérieur et un deuxième évidemment s'étendant radialement vers l'extérieur. On a pu constater qu'avec une telle forme, on assure une déformation efficace lorsqu'on monte le dispositif entre les pièces à mettre en contrainte permanente. De préférence, le dispositif comprend des zones de transition inclinées entre chaque zone de déformation et les surfaces de contact adjacentes à la zone de déformation. Avantageusement, chaque zone de transition inclinée comprend une première partie extrême arrondie reliée à une des zones de déformation, une deuxième partie extrême reliée à une des surfaces de contact planes et une partie centrale essentiellement plane entre les première et deuxième parties extrêmes. Ceci permet de limiter considérablement la concentration de contrainte.

Avantageusement, pour chacune des surfaces de contact, deux surfaces de contact planes successives sont séparées l'une de l'autre d'une distance prédéterminée. Ceci permet d'assurer une meilleure répartition de l'effort de précontrainte sur la circonférence des pièces à mettre en contrainte.

Le nombre de surfaces de contact planes est de préférence choisi entre dix et vingt, et plus particulièrement entre treize et dix-sept. On a pu constater qu'en sélectionnant ces valeurs, on optimise la répartition de l'effort de précontrainte.

La présente invention concerne également un rotor, en particulier rotor d'hélice non carénée pour une turbomachine, comprenant un dispositif de précontrainte tel que décrit ci-dessus.

L'invention sera mieux comprise et d'autres détails, caractéristiques et avantages de la présente invention apparaîtront plus clairement à la lecture de la description qui suit, faite à titre d'exemple non limitatif et en référence aux dessins annexés dans lesquels :
- la figure 1 est une vue schématique partielle en perspective d'un dispositif de précontrainte, suivant l'invention, sur un écrou,
- la figure 2 est une vue schématique en plan du dispositif de précontrainte selon la figure 1, et
- la figure 3 est une vue schématique partielle en perspective du dispositif de la figure 1 placé entre l'écrou et la rondelle de verrouillage d'une part, et un palier d'autre part.

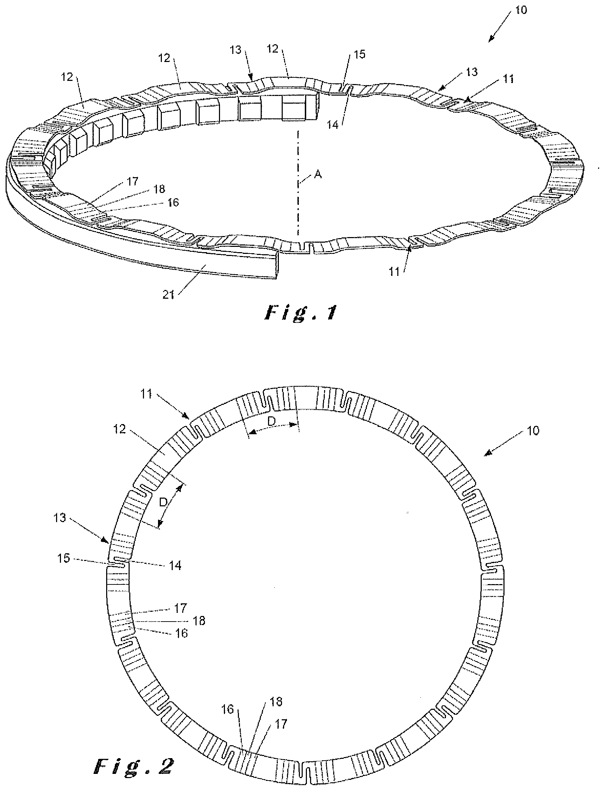

On se réfère d'abord à la figure 1 qui représente un dispositif de précontrainte 10, constituée par un élément de forme annulaire.

Ce dispositif est constitué d'une succession de zones de déformation 11, zones de transition 13 et surfaces de contact planes 12.

Les zones de déformation 11 s'étendent dans un premier plan perpendiculaire à l'axe A du dispositif. Chaque zone de déformation comprend des évidements 14 et 15, Comme illustré à la figure 1, un premier évidement 14 s'étend vers l'intérieur, c'est-à-dire vers l'axe A du dispositif. Le deuxième évidemment 15 s'étend radialement vers l'extérieur.

Les zone de transition 13 présentent chacune des parties extrêmes arrondies 16 et 17 et une partie centrale 18 essentiellement plane.

Les surfaces de contact planes 12 s'étendent dans un deuxième plan parallèle au premier plan. La distance entre le premier plan et le deuxième plan est déterminée en fonction de la course souhaitée du dispositif.

Le dispositif de précontrainte 10 (figure 2) comprend, dans l'exemple représenté, une série de quinze surfaces de contact 12. De manière générale, on prévoit entre dix et vingt surfaces de contact, et de préférence entre treize et dix-sept surfaces de contact.

Deux surfaces de contact planes successives sont séparées l'une de l'autre d'une distance prédéterminée (D) qui est de préférence la même pour chaque série de deux surfaces de contact planes successive, afin de répartir les efforts de manière homogène.

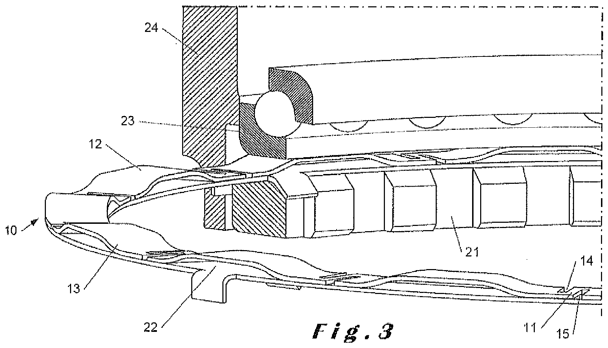

Dans un montage du dispositif de précontrainte représenté en figure 3, on remarque que le dispositif 10 est placé entre l'ensemble formé par un écrou 21 et sa rondelle de verrouillage 22 d'une part et un palier 23 (à billes dans l'exemple représenté) d'autre part. Le palier 23 est logé dans un anneau polygonal 24. Les surfaces inférieures des zones de déformation 11 sont en contact avec la surface supérieure de la rondelle de verrouillage 22. Les surfaces de contact planes 12 sont en contact avec la surface inférieure du palier 23. Un véritable contact surfacique entre les différentes pièces est ainsi assuré.

Dans une variante de réalisation non représentée, le nombre de surfaces de contact planes par élément peut être inférieur à 10.

Le dispositif de précontrainte suivant l'invention a été représenté monté dans un assemblage d'un rotor, qui peut être un rotor d'hélice non carénée pour une turbomachine. Il peut toutefois être utilisé dans d'autres assemblages ou une contrainte permanente est nécessaire. Le dispositif est particulièrement avantageux dans des ensembles mécaniques soumis à de forts niveaux de vibration comme par exemple les turbomachines.

## Revendications

1. Dispositif de précontrainte (10) s'étendant autour d'un axe (A) entre un premier plan sensiblement perpendiculaire à l'axe (A) et un deuxième plan sensiblement parallèle au premier plan et axialement décalé par rapport à celui-ci, le dispositif comprenant au moins trois zones de déformation (11), s'étendant dans le premier plan, et entre chaque zone de déformation (11), une surface de contact plane (12) s'étendant dans le deuxième plan, **caractérisé en ce que** chaque zone de déformation (11) comprend un premier évidemment (14) s'étendant radialement vers l'intérieur et un deuxième évidemment (15) s'étendant radialement vers l'extérieur.

2. Dispositif selon la revendication 1, **caractérisé en ce qu'**il comprend des zones de transition inclinées (13) entre chaque zone de déformation (11) et les surfaces de contact (12) adjacentes à la zone de déformation.

3. Dispositif selon la revendication 2, **caractérisé en ce que** chaque zone de transition inclinée comprend une première partie extrême arrondie (16) reliée à une des zones de déformation, une deuxième partie extrême (17) reliée à une des surfaces de contact planes (12) et une partie centrale essentiellement plane (18) entre les première et deuxième parties extrêmes.

4. Dispositif selon l'une des revendications précédentes, **caractérisé en ce que**, pour chacune des surfaces de contact, deux surfaces de contact planes successives sont séparées l'une de l'autre d'une distance prédéterminée (D).

5. Dispositif selon l'une des revendications précédentes, **caractérisé en ce que** le nombre de surfaces de contact planes (12) est entre dix et vingt, et de préférence entre treize et dix-sept.

6. Rotor, en particulier rotor d'hélice non carénée pour une turbomachine, **caractérisé en ce qu'**il comprend un dispositif de précontrainte selon l'une des revendications précédentes.

## Patentansprüche

1. Vorspannungsvorrichtung (10), die sich um eine Achse (A) zwischen einer ersten Ebene, die im Wesentlichen senkrecht zur Achse (A) ist, und einer zweiten Ebene erstreckt, die im Wesentlichen parallel zur ersten Ebene und axial mit Bezug auf diese versetzt ist, wobei die Vorrichtung mindestens drei Verformungsbereiche (11) umfasst, die sich in der ersten Ebene erstrecken, und zwischen jedem Verformungsbereich (11) eine ebene Kontaktfläche (12), die sich in der zweiten Ebene erstreckt, **dadurch gekennzeichnet, dass** jeder Verformungsbereich (11) eine erste Aussparung (14) umfasst, die sich radial nach innen erstreckt, und eine zweite Aussparung (15), die sich radial nach außen erstreckt.

2. Vorrichtung nach Anspruch 1, **dadurch gekennzeichnet, dass** sie geneigte Übergangsbereiche (13) zwischen jedem Verformungsbereich (11) und den Kontaktflächen (12) benachbart zum Verformungsbereich umfasst.

3. Vorrichtung nach Anspruch 2, **dadurch gekennzeichnet, dass** jeder geneigte Übergangsbereich einen ersten abgerundeten Endteil (16) umfasst, der mit einem der Verformungsbereiche verbunden ist, einen zweiten Endteil (17), der mit einer der ebenen Kontaktflächen (12) verbunden ist, und einen im Wesentlichen ebenen zentralen Teil (18) zwischen dem ersten und zweiten Endteil.

4. Vorrichtung nach einem der vorstehenden Ansprüche, **dadurch gekennzeichnet, dass** bei jeder der Kontaktflächen zwei aufeinander folgende ebene Kontaktflächen voneinander um einen vorbestimmten Abstand (D) getrennt sind.

5. Vorrichtung nach einem der vorstehenden Ansprüche, **dadurch gekennzeichnet, dass** die Anzahl der ebenen Kontaktflächen (12) zwischen zehn und zwanzig, und vorzugsweise zwischen dreizehn und siebzehn liegt.

6. Rotor, insbesondere Propellermotor ohne Mantel für eine Turbomaschine, **dadurch gekennzeichnet, dass** er eine Vorspannungsvorrichtung nach einem der vorstehenden Ansprüche umfasst.

## Claims

1. Prestressing device (10) which extends about an axis (A) between a first plane substantially perpendicular to the axis (A) and a second plane substantially parallel to the first plane and axially offset with respect to the latter, the device comprising at least three deformation zones (11), extending within the first plane, and between each deformation zone (11), a planar contact surface (12) extending within the second plane, **characterized in that** each deformation zone (11) comprises a first recess (14) extending radially inward and a second recess (15) extending radially outward.

2. Device as claimed in claim 1, **characterized in that** it comprises inclined transition zones (13) between each deformation zone (11) and the contact surfaces (12) adjacent to the deformation zone.

3. Device as claimed in claim 2, **characterized in that** each inclined transition zone comprises a first rounded end part (16) connected to one of the deformation zones, a second end part (17) connected to one of the planar contact surfaces (12), and an essentially planar central part (18) between the first and second end parts.

4. Device as claimed in one of the preceding claims, **characterized in that**, for each of the contact surfaces, two successive planar contact surfaces are separated from each other by a predetermined distance (D) .

5. Device as claimed in one of the preceding claims, **characterized in that** the number of planar contact surfaces tabs (12) is between ten and twenty, and preferably between thirteen and seventeen.

6. Rotor, in particular an impeller rotor, with no fairing, for a turbine engine, **characterized in that** it comprises a prestressing device as claimed in one of the preceding claims.
